Europäisches Patentamt

European Patent Office

Office européen des brevets

(19)

(11) Numéro de publication: **0 288 387**
**B1**

(12)

# FASCICULE DE BREVET EUROPEEN

(45) Date de publication du fascicule du brevet:
**29.08.90**

(51) Int. Cl.⁵: **C01B 3/36**

(21) Numéro de dépôt: **88400973.9**

(22) Date de dépôt: **21.04.88**

(54) **Procédé d'oxydation partielle de gaz carburant.**

(30) Priorité: **24.04.87 FR 8705775**

(43) Date de publication de la demande:
**26.10.88 Bulletin 88/43**

(45) Mention de la délivrance du brevet:
**29.08.90 Bulletin 90/35**

(84) Etats contractants désignés:
**AT BE CH DE ES FR GB IT LI NL SE**

(56) Documents cités:
**EP-A- 0 151 683**
**FR-A- 2 485 692**
**US-A- 3 847 564**

(73) Titulaire: **SOCIETE CHIMIQUE DE LA GRANDE PAROISSE, Tour Aurore Place des Reflets Paris La Défense 2, F-92080 Courbevoie(FR)**

(72) Inventeur: **Papillon, André, 20, rue Camp de César, F-81100 Castres(FR)**
Inventeur: **Sergent, Jean-Luc, 11, rue des Bergeries, F-93130 Noisy-Le-Sec(FR)**
Inventeur: **Pelletier, Robert, Commenchon, F-02300 Chauny(FR)**
Inventeur: **Lesur, Pierre, 20, avenue Rapp, F-75007 Paris(FR)**
Inventeur: **Genies, Bernard, 53, avenue de Beauséjour, F-91440 Bures-sur-Yvette(FR)**

(74) Mandataire: **Rieux, Michel, NORSOLOR Service Propriété Industrielle Tour Aurore 18, Place des Reflets Cedex no. 5, F-92080 Paris la Défense 2(FR)**

## Description

La présente invention concerne un procédé d'oxydation partielle.

Depuis plusieurs décennies, les réactions d'oxydation partielle d'équilibre en phase gazeuse sont conduites dans des réacteurs contenant ou non du catalyseur à l'extérieur desquels sont disposés des moyens de contrôle et de régulation des températures de réaction. Classiquement, un injecteur à deux fluides concentriques est installé dans le four d'oxydation partielle et est "noyé" dans le catalyseur qui remplit complètement ou partiellement le four. Certains injecteurs à deux fluides peuvent être installés dans un four sans catalyseur.

Dans ces injecteurs à deux fluides, on réalise un prémélange interne du carburant et du comburant. De la vapeur d'eau surchauffée est généralement mélangée au carburant et au comburant pour refroidir le nez du brûleur. Le prémélange carburant-comburant dans le brûleur présente des risques de retour de flamme. La durée de vie des injecteurs à prémélange est souvent limitée à deux ou trois mois. Ceci occasionne des arrêts imprévus et de ce fait augmente les coûts de production.

La présente invention concerne un procédé d'oxydation partielle en continu par injection concentrique de gaz carburant et comburant, réaction dans une enceinte fermée, et évacuation des gaz résultants, caractérisé en ce que l'injection est réalisée en trois flux concentriques, en ce que le mélange du carburant et du comburant a lieu à l'extérieur de l'injecteur, et en ce que le flux central comporte x% de carburant et éventuellement du gaz vecteur, le flux médian comporte le comburant et éventuellement du gaz vecteur, et le flux externe comporte 100 - x% de carburant et éventuellement du gaz vecteur, x étant compris entre 2 et environ 98.

Le procédé selon l'invention s'applique à l'oxydation partielle d'hydrocarbure ou en général de mélanges gazeux contenant notamment de l'hydrogène, du monoxyde de carbone, du gaz carbonique et des hydrocarbures. Ce mélange gazeux est mélangé à plus ou moins de vapeur d'eau ou d'autres gaz vecteurs pour réaliser l'oxydation partielle.

Il s'applique en particulier à la fabrication d'un mélange gazeux contenant une forte proportion d'hydrogène et de monoxyde de carbone, et précisément à la production de mélanges gazeux de synthèse d'ammoniac, de méthanol ou d'alcool oxo. Ce procédé peut également être utilisé pour d'autres types de réaction d'oxydation partielle ou ménagée, l'enceinte de réaction étant ou non ou partiellement garnie des catalyseurs nécessaires à l'oxydation ou à la transformation des gaz résultants de l'oxydation ménagée.

Dans le cas particulier de l'oxydation du gaz naturel à forte teneur en méthane, qui constitue le carburant, par de l'oxygène, qui constitue le comburant, selon l'invention, le carburant et le comburant sont mélangés à l'extérieur de l'injecteur, c'est-à-dire en aval du nez du brûleur. De plus le carburant et le comburant sont préalablement mélangés avec de la vapeur d'eau surchauffée. Le gaz vecteur est donc ici de la vapeur d'eau.

On peut utiliser également d'autres carburants. Comme comburant, outre l'oxygène, on peut utiliser de l'air ou un mélange d'air et d'oxygène, éventuellement additionnés de gaz carbonique, et comme gaz vecteur, outre la vapeur d'eau, on peut utiliser d'autres gaz comme l'azote ou le gaz carbonique.

Selon l'invention, dans le cas particulier de l'oxydation ménagée du méthane, le flux central comporte du carburant et éventuellement du gaz vecteur, par exemple de la vapeur d'eau, ce premier mélange contenant une partie mineure (x %) du carburant à oxyder. Le flux médian comporte le comburant mélangé ou non avec du gaz vecteur. Le flux externe comporte la partie majeure (100 - x %) du carburant à oxyder et éventuellement du gaz vecteur, par exemple de la vapeur d'eau. Le flux central de carburant entre en contact et se mélange au comburant du flux médian. La composition du mélange détermine la vitesse de propagation et permet de déterminer la vitesse d'ejection des gaz pour atteindre la stabilité du front de flamme. Cette oxydation plus ou moins complète des flux interne et médian produit une flamme chaude provenant de la combustion stoechiométrique très exothermique. Cette flamme primaire, par mélange avec le flux externe permet une combustion globale sous-stoechiométrique et favorise la production de produit d'oxydation ménagée. Dans le cas particulier de la combustion du méthane, ces produits sont l'hydrogène et le monoxyde de carbone.

De préférence, x est choisi selon l'invention entre environ 2 et environ 20, de préférence entre environ 3 et 15 ; d'autres valeurs de x sont cependant envisageables. La pression dans l'enceinte est de l'ordre de 25 bars dans le cas d'un procédé de traitement du méthane. On peut cependant envisager des pressions de l'ordre de 1 à 150 bars. Les températures de fonctionnement sont comprises entre environ 1000 et 3000°C.

Le procédé selon l'invention présente donc un double avantage sur les procédés existant. D'une part, l'absence de prémélange interne supprime le risque de retour de flamme et de détérioration de l'injecteur. D'autre part, la combustion ayant lieu à l'extérieur de l'injecteur, celui-ci est moins chaud, et une partie de la vapeur d'eau surchauffée employée selon les procédés connus pour refroidir l'injecteur n'est plus nécessaire, ce qui réduit le coût énergétique du procédé.

Les réacteurs d'oxydation partielle selon l'invention comportent des moyens d'injection des fluides, une enceinte réactionnelle et des moyens d'évacuation des gaz, et sont caractérisés en ce que les moyens d'injection sont constitués d'un injecteur à trois flux concentriques. L'injecteur, en tout ou partie, et en particulier le nez de l'injecteur est constitué selon l'invention d'un matériau résistant aux chocs de température, à la corrosion et aux pressions élevées. Ce matériau doit en particulier résister à des températures de l'ordre de 1000 à 3000° et est de préférence un matériau céramique. Une céramique à base de carbure de silicium convient.

Afin de réaliser de façon optimale, après le mélange externe et la réalisation de la flamme primaire, le mélange du flux externe avec les produits de combustion de cette flamme primaire, l'espace annulaire de l'injecteur dans lequel transite le flux externe est de préférence muni de moyens de mise en rotation de ce gaz, et il peut être en particulier muni d'ailettes inclinées. D'autres moyens de mise en rotation des gaz sont envisageables, par exemple des jets divergents ou tout autre moyen pour créer un vortex gazeux.

D'autres caractéristiques avantages de l'invention apparaîtront sur les dessins annexés qui représentent :

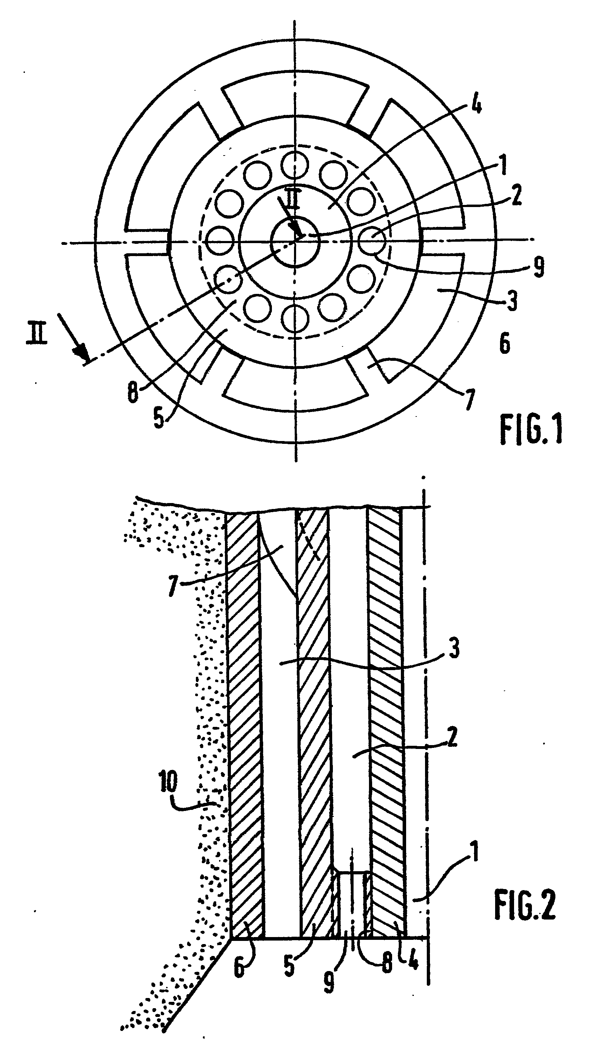

- à la figure 1, une vue de face du nez de l'injecteur, et
- à la figure 2, une coupe du nez de l'injecteur débouchant dans l'enceinte selon la coupe I-I définie à la figure 1 ;

Sur ces figures apparaissent clairement les espaces annulaires 1, 2 et 3 laissant passer les mélanges gazeux ; un premier tube central 4 définit l'espace 1 où circule le flux central, c'est-à-dire la partie mineure de carburant mélangée au vecteur. Un second tube 5 de diamètre supérieur au diamètre extérieur du tube 4 définit l'espace annulaire 2 par lequel est injecté le mélange de comburant et de gaz vecteur. L'extrémité de ce tube 5 est pourvu d'un épaulement 8 réduisant son diamètre interne sensiblement au même diamètre que le diamètre externe du tube 4 et percé de trous 9 permettant le passage du flux médian c'est-à-dire le mélange gazeux comburant. Un tube 6 garni d'ailettes inclinées 7 dont les bords externes viennent s'ajuster sur la surface externe du tube 5 laisse un espace 3 emprunté par le flux externe, c'est-à-dire le mélange comportant la majorité du carburant et un gaz vecteur, et qui sort de cet espace annulaire avec un mouvement de rotation. Le diamètre externe du tube 6 correspond sensiblement au diamètre de l'espace ménagé pour le nez de l'injecteur dans la paroi de l'enceinte 10 partiellement représentée.

Dans un mode de réalisation non représenté, l'écoulement des gaz est assuré à travers un cylindre remplaçant le tube central 4 et deux couronnes concentriques remplaçant les tubes concentriques 5 et 6. Ces cylindre et couronnes en céramique ont une structure alvéolaire, et sont du type des composants pour échangeur de chaleur à tubes alvéolaires. Ce mode de réalisation permet de plus faibles dimensions de l'injecteur. Dans ce mode de réalisation, la mise en rotation des gaz du flux externe est assurée par exemple par l'inclinaison des parois alvéolaires.

Sur les figures ne sont pas représentés ni l'ensemble de l'enceinte de réaction pourvue de moyens d'evacuation des gaz, éventuellement garnie de catalyseur, ni les sources de gaz comburant, combustible, vecteur et leurs mélangeurs et régulateurs de débit, ces dispositifs étant connus en soi.

## Revendications

1. Procédé d'oxydation partielle en continu par injection concentrique de gaz carburant et comburant, réaction dans une enceinte fermée, et évacuation des gaz résultants, caractérisé en ce que l'injection est réalisée en trois flux concentriques, en ce que le mélange du carburant et du comburant a lieu à l'extérieur de l'injecteur, et en ce que le flux central comporte x% de carburant et éventuellement du gaz vecteur, le flux médian comporte le comburant et éventuellement du gaz vecteur, et le flux externe comporte 100 - x% de carburant et éventuellement du gaz vecteur, x étant compris entre 2 et environ 98.

2. Procédé selon la revendication 1, caractérisé en ce que la réaction a lieu sous pression.

3. Procédé selon la revendication 1 ou 2, caractérisé en ce que la réaction a lieu dans une enceinte vide.

4. Procédé selon la revendication 1 ou 2, caractérisé en ce que la réaction a lieu dans une enceinte au moins partiellement garnie de catalyseur.

5. Procédé selon l'une des revendications 1 à 4, caractérisé en ce qu'x est compris entre environ 2 et 20, de préférence entre 3 et 15.

6. Procédé selon l'une des revendications 1 ou 5, caractérisé en ce que le gaz vecteur est choisi parmi la vapeur d'eau surchauffée, l'azote, le dioxyde de carbone et leurs mélanges.

7. Procédé selon l'une des revendications 1 à 6, caractérisé en ce que le gaz du flux externe est animé d'un mouvement de rotation.

## Claims

1. Process for the continuous partial oxidation of fuel and combustion gases by concentric injection, reaction in a closed enclosure and removal of the resultant gases, characterized in that the injection is performed in three concentric flows, in that the mixing of the fuel and of the combustion gas takes place outside the injector, and in that the central flow comprises x% of fuel and optionally carrier gas, the median flow comprises the fuel and optionally carrier gas, and the outer flow comprises 100–x% of fuel and optionally carrier gas, x being between 2 and approximately 98.

2. Process according to claim 1, characterized in that the reaction takes place under pressure.

3. Process according to claim 1 or 2, characterized in that the reaction takes place in an empty enclosure.

4. Process according to claim 1 or 2, characterized in that the reaction takes place in an enclosure which is at least partially packed with catalyst.

5. Process according to one of claims 1 to 4, characterized in that x is between approximately 2 and 20, preferably between 3 and 15.

6. Process according to one of claims 1 or 5, characterized in that the carrier gas is chosen from superheated steam, nitrogen, carbon dioxide and mixtures thereof.

7. Process according to one of claims 1 to 6, characterized in that a rotary motion is imparted to the gas of the outer flow.

## Patentansprüche

1. Verfahren zur kontinuierlichen Partialoxidation durch konzentrisches Einspritzen von Brennstoffgas und Sauerstoffträger, wobei die Reaktion in einem geschlossenen Raum stattfindet und die resultierenden Gase abgeführt werden, dadurch gekennzeichnet, daß das Einspritzen in drei konzentrischen Strömen erfolgt, daß das Mischen des Brennstoffes und des Sauerstoffträgers außerhalb des Injektors stattfindet und daß der mittlere Strom x% Brennstoff und gegebenenfalls Traggas enthält, der mittlere Strom den Sauerstoffträger und gegebenenfalls Traggas und der äußere Strom 100–x% Brennstoff und eventuell Traggas, wobei x zwischen 2 und etwa 98 beträgt.

2. Verfahren nach Anspruch 1, dadurch gekennzeichnet, daß die Reaktion unter Druck stattfindet.

3. Verfahren nach Anspruch 1 oder 2, dadurch gekennzeichnet, daß die Reaktion in einem leeren Raum stattfindet.

4. Verfahren nach Anspruch 1 oder 2, dadurch gekennzeichnet, daß die Reaktion in einem mindestens teilweise mit Katalysator ausgekleideten Raum stattfindet.

5. Verfahren nach einem der Ansprüche 1 bis 4, dadurch gekennzeichnet, daß x zwischen etwa 2 und 20, vorzugsweise zwischen 3 und 15, beträgt.

6. Verfahren nach Anspruch 1 oder 5, dadurch gekennzeichnet, daß das Traggas ausgewählt ist aus der Gruppe bestehend aus überhitztem Wasserdampf, Stickstoff, Kohlendioxid und deren Gemischen.

7. Verfahren nach einem der Ansprüche 1 bis 6, dadurch gekennzeichnet, daß der äußere Gasstrom in Drehbewegung versetzt wird.

FIG.1

FIG.2